# EUROPEAN PATENT APPLICATION

(11) **EP 4 559 300 A1**
(43) Date of publication of application: **28.05.2025**
(21) Application number: 24210605.2
(22) Date of filing: 04.11.2024
(51) Int. Cl.: A01C 7/10, A01C 7/12

(54) **VISION SYSTEM FOR METERING DEVICE**

(30) Priority: 21.11.2023 US 202318516313
(71) Applicant: Great Plains Manufacturing, Inc., Salina, KS 67401 (US)
(72) Inventor: DEGARMO,, Rye, Salina, 67401 (US); ARNETT,, Gregory W., Garden City, 64747 (US)
(74) Representative: Potter Clarkson

(57) **Abstract**

A metering device (16) for dispensing agricultural product from a bin (14). The metering device (16) comprises a housing (40, 42) enclosing an interior space, and at least one metering wheel (44) positioned within the interior space of the housing (40, 42) and configured to convey agricultural product through the metering device (16). The metering device (16) additionally comprises an access door (55) rotatably coupled with the housing (40, 42) and configured to selectively provide access to the interior space of the housing (40, 42). The metering device (16) further includes a vision system comprising at least one camera (82) incorporated with the access door (55). The camera (82) is configured to capture images and/or video of agricultural product being conveyed through the metering device (16).

## Description

### FIELD OF THE INVENTION

Embodiments of the present invention are directed generally to agricultural implements. In more detail, embodiments of the present invention are directed to agricultural implements that include (i) metering devices for dispensing seed and/or other agricultural products into or onto the ground, and/or (ii) vision-based systems for monitoring the agricultural product flowing through the metering devices.

### BACKGROUND OF THE INVENTION

Certain agricultural implements, such as seed drills are configured to dispense agricultural products (e.g., seed, plant treatment, soil treatment, or the like) into or onto the ground. Commonly, a drill will include one or more bins that hold agricultural product. As the drill is pulled through a field by a tractor or other prime mover, agricultural product can be dispensed from the bins via a plurality of metering devices associated with the bins.

Unfortunately, previously-used metering devices were often difficult to monitor to ensure that agricultural product was properly flowing through the metering devices. For example, if a blockage existed in the agricultural product path through the agricultural implement (e.g., before, after, or within the metering devices), the agricultural implement will not be depositing the appropriate amount of agricultural product into or onto the ground. Due to the size and complexity of the agricultural implement, it can be difficult to determine whether (or where) such a blockage exists.

Similarly, if the metering devices are configured improperly, such that too much or too little agricultural product is flowing through the metering devices and/or such that the flow patterns of agricultural product through the metering devices are not uniform, then the agricultural implement will not be depositing the appropriate amount of seed into or onto the ground. Nevertheless, due to the size and complexity of the agricultural implement, it can be difficult to determine how the seed is flowing through the metering devices. As such, it would be beneficial if there were a metering device particularly configured to (i) determine the rate at which agricultural product is flowing through the metering device to improve accuracy of the count of agricultural product particulates (e.g., seed) flowing through the metering devices, and/or (ii) determine how uniformly the agricultural product is flowing through the metering device.

### SUMMARY OF THE INVENTION

In one embodiment of the present invention, there is provided a metering device for dispensing agricultural product from a bin. The metering device comprises a housing enclosing an interior space, and at least one metering wheel positioned within the interior space of the housing and configured to convey agricultural product through the metering device. The metering device additionally comprises an access door rotatably coupled with the housing and configured to selectively provide access to the interior space of the housing. The metering device further includes a vision system comprising at least one camera incorporated with the access door. The camera is configured to capture images and/or video of agricultural product being conveyed through the metering device.

Embodiments of the present invention additionally include an implement for dispensing agricultural product. The implement comprises a bin for holding the agricultural product, and a plurality of metering devices secured to a bottom of the bin and configured to dispense agricultural from the bin onto the ground. Each of the metering devices includes a housing enclosing an interior space, and at least one metering wheel positioned within the interior space of the housing and configured to convey agricultural product through the metering device. Each metering device additionally includes an access door rotatably coupled with the housing and configured to selectively provide access to the interior space of the housing. Each metering device additionally includes a vision system comprising at least one camera incorporated with the access door. The camera is configured to capture images and/or video of agricultural product being conveyed through the metering device. The metering device further comprises a control system comprising a processing element configured to analyze the images and/or video to determine if flow rates and/or flow patterns of agricultural product through the metering devices is appropriate.

Embodiments of the present invention additionally comprise a method of dispensing agricultural product from an implement. The method includes a step of transferring agricultural product from a bin of the implement to a metering device. The metering device comprises a housing and an access door rotatably coupled with the housing. An additional step includes conveying agricultural product through the metering device. An additional step includes obtaining, via a camera integrated with the access door, images or video of the agricultural product being conveyed through the metering device. An additional step includes transmitting the images or video to a control system configured to analyze the images or video to determine a flow rate or a flow pattern of the agricultural product through the metering device. A further step includes adjusting the metering device to modify the flow rate or the flow pattern of agricultural product through the metering device.

This summary is provided to introduce a selection of concepts in a simplified form that are further described below in the detailed description. This summary is not intended to identify key features or essential features of the claimed subject matter, nor is it intended to be used to limit the scope of the claimed subject matter. Other aspects and advantages of the present invention will be apparent from the following detailed description of the embodiments and the accompanying drawing figures.

### BRIEF DESCRIPTION OF THE FIGURES

Embodiments of the present invention are described herein with reference to the following drawing figures, wherein:
FIG. 1 is a rear perspective view of an agricultural implement according to embodiments of the present invention, with the agricultural implement including one or more bins that include a plurality of metering devices attached thereto for metering agricultural product from the bins into or onto the ground;
FIG. 2 is a bottom perspective view of an underside of the agricultural implement of FIG. 1, illustrating a bin including a plurality of metering devices attached to a bottom of the bin;
FIG. 3 is a lower perspective view of a bottom section of a bin from the agricultural implement from FIGS. 1 and 2, with the bottom section of the bin including a row of metering devices secured to a bottom of the bottom section of the bin;
FIG. 4 is a cross section of the bin and one of the metering devices from 8 taken along the line 4-4 from FIG. 3;
FIG. 5 is a front perspective view of a metering device according to embodiments of the present invention;
FIG. 6 is a side elevation of the metering device from FIG. 5, particularly illustrating a vision system incorporated with an access door of the metering device;
FIG. 7 is a rear perspective exploded view of the metering device from FIGS. 5 and 6;
FIG. 8 is a front perspective exploded view of the metering device from FIGS. 5-7;
FIG. 9 is another front perspective view of the metering device from FIGS. 5-8, particularly illustrating a first product door in an open position;
FIG. 10 is another front perspective view of the metering device from FIGS. 5-9, particularly illustrating a second product door in an open position;
FIG. 11 is a cross section of a metering device according to embodiments of the present invention, with the metering device secured to a bottom of a bin, with the metering device conveying agricultural product from the bin and through the metering device, and with a vision system configured to obtain images and/or video of the agricultural product being conveyed through the metering device; and
FIG. 12 is a schematic diagram of a control system configured for use on the agricultural implement of FIGS. 1 and 2.

The figures are not intended to limit the present invention to the specific embodiments they depict. While the drawings do not necessarily provide exact dimensions or tolerances for the illustrated structures or components, the drawings are to scale with respect to the relationships between the components of the structures illustrated in the drawings.

### DETAILED DESCRIPTION

The following detailed description of the present invention references various embodiments. The embodiments are intended to describe aspects of the invention in sufficient detail to enable those skilled in the art to practice the invention. Other embodiments can be utilized and changes can be made without departing from the scope of the present invention. The following detailed description is, therefore, not to be taken in a limiting sense. The scope of the present invention is defined only by the appended claims, along with the full scope of equivalents to which such claims are entitled.

In this description, references to "one embodiment," "an embodiment," or "embodiments" mean that the feature or features referred to are included in at least one embodiment of the invention. Separate references to "one embodiment," "an embodiment," or "embodiments" in this description do not necessarily refer to the same embodiment and are not mutually exclusive unless so stated. Specifically, a feature, component, action, step, etc. described in one embodiment may also be included in other embodiments, but is not necessarily included. Thus, particular implementations of the present invention can include a variety of combinations and/or integrations of the embodiments described herein.

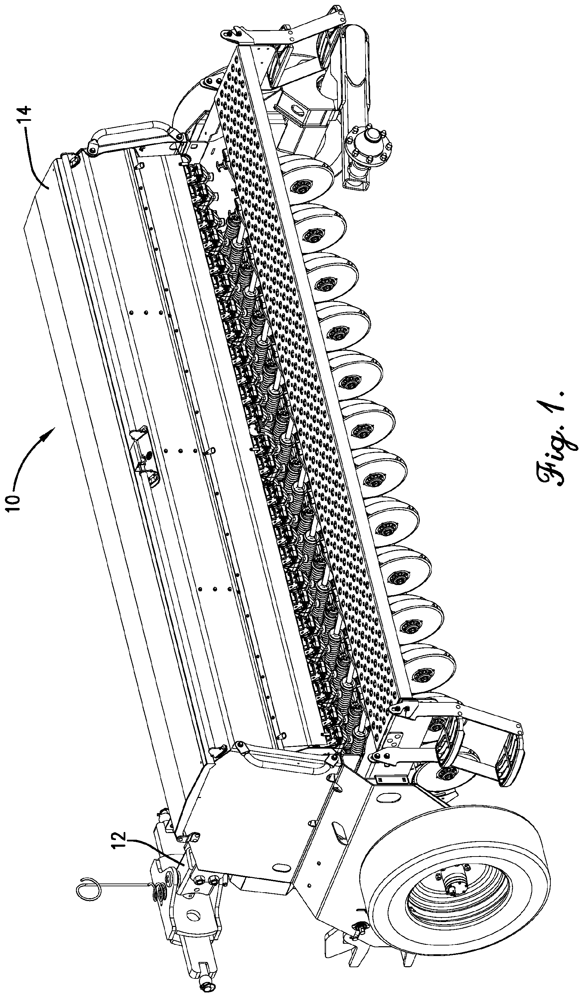

Embodiments of the present invention are directed generally to agricultural implements, such as a seed and/or treatment drill 10 illustrated in FIG. 1. The drill 10 may comprise a frame 12 that is towed by a tractor or other prime mover (not shown). The frame 12 may support one or more bins 14 that extend laterally across a portion of the length of the frame 12. As will be described in more detail below, the bins 14 are configured to hold agricultural products, such as seed and/or treatment (e.g., fertilizer, pesticides, etc.), for dispensing into and/or onto the ground. In some embodiments, the bins 14 may be divided into multiple containment sections that are each configured to hold distinct types of agricultural product. For instance, the bins 14 may be separated, so as to include a first containment section configured to hold a first type of agricultural product (e.g., seed), and a second containment section configured to hold a second type of agricultural product (e.g., treatment).

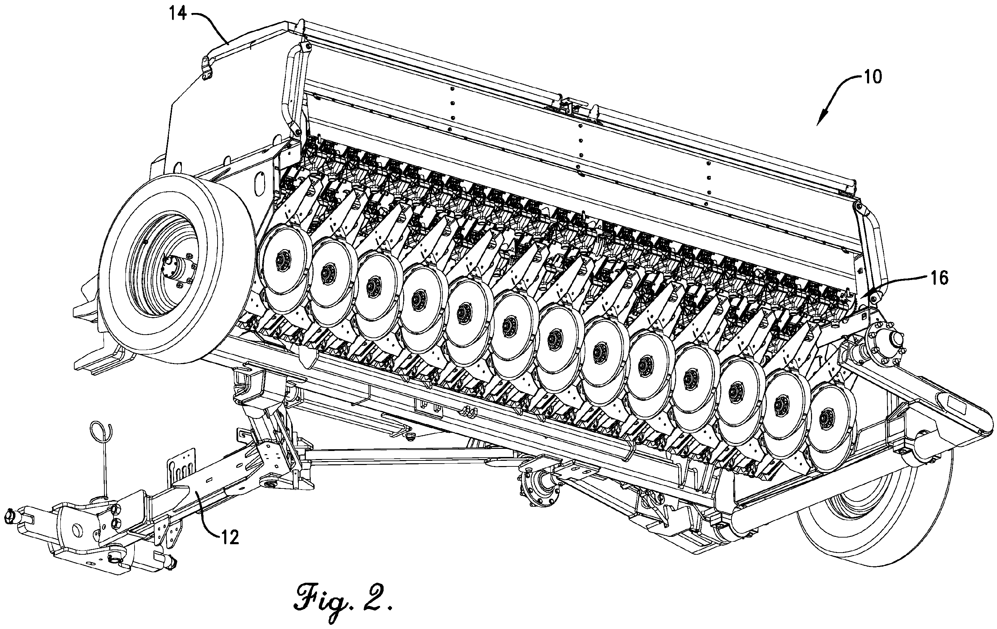

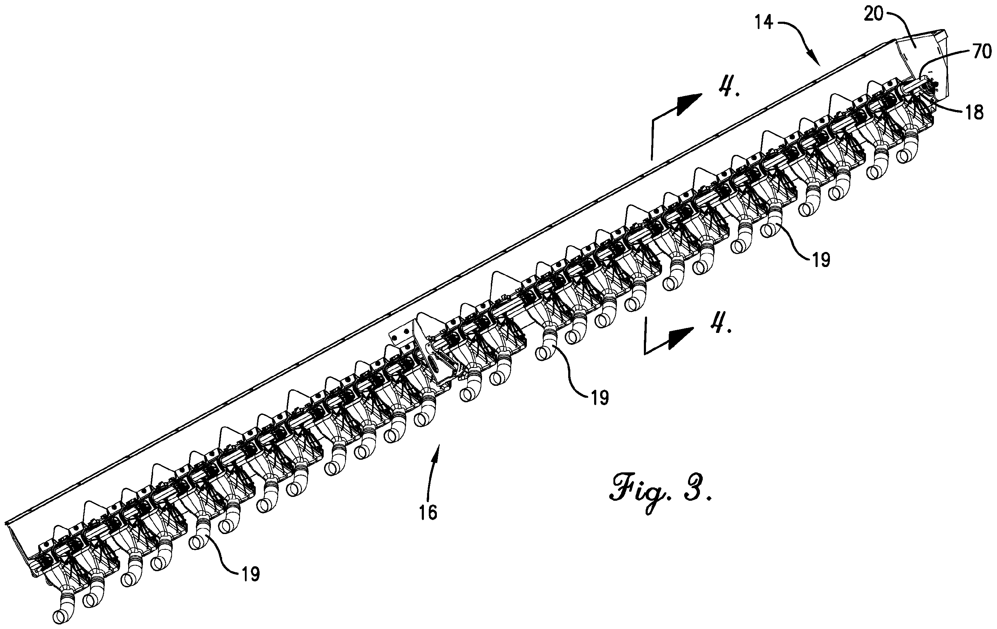

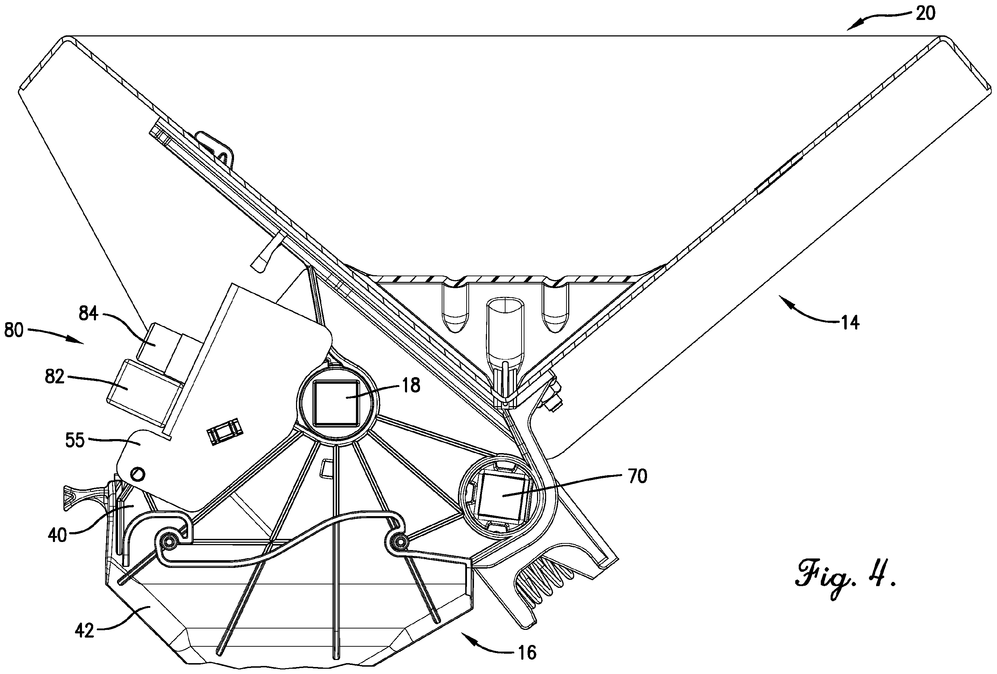

To facilitate dispensing of agricultural product from the drill 10, the drill 10 may additionally comprise a plurality of metering devices 16 secured to a bottom side of the bin 14, such as illustrated in FIG. 2. In instances in which the bin 14 is divided into multiple containment sections, embodiments may provide for a plurality of metering devices 16 to be secured to a bottom of each containment section. Nevertheless, as will be described in more detail below, the metering devices 16 are configured to precisely meter agricultural product from the bin 14 into or onto the ground. To accomplish such metering, the drill 10 may include a primary driveshaft 18 (See FIGS. 3 and 4) that extends through each of the metering devices 16 and rotates components of the metering devices 16 such that agricultural product can be removed from the bin 14, conveyed through the metering devices 16, and dispensed from the drill 10 into or onto the ground. As shown in FIG. 3, in some embodiments, each of the metering devices 16 may include a product tube 19 secured to a bottom end the metering device 16 and which extends downward towards the ground. In such embodiments, agricultural product may be metered from the bins 14 via the metering devices 16, and dispensed into or onto the ground after passing (e.g., falling) through the product tubes 19.

Beginning with the bin 14, as illustrated in FIG. 1, the bin 14 may comprise a generally rectangular container configured to hold agricultural products (e.g., seed and/or treatment). Turning to FIG. 3, a bottom section 20 of the bin 14 may be formed in a triangular or funnel shape. In some embodiments, the bin 14 may include a bottom section 20 that comprises a plurality of product openings formed through the bottom of the bottom section 20. Embodiments provide for the metering devices 16 to be secured to an exterior side of the bottom of the bottom section 20, with each metering device 16 being positioned in alignment with one of the product openings (See FIG. 3). Given the configuration of the bin 14 (and particularly the bottom section 20 of the bin 14), agricultural product held within the bin 14 will be funneled downward under the force of gravity towards the product openings, such that the agricultural product can pass through the product openings to the metering devices 16 that function to dispense the agricultural product from the bin 14 into or onto the ground. To promote efficient funneling and mixing of the agricultural product within the bin 14, some embodiments may provide for the bin 14 to include a mixing assembly (not shown) extending through the interior space of the bin 14. Such mixing assemblies may include a rotatable shaft that extends through a length of the bin 14 and includes a plurality of mixing arms extending therefrom. As such, rotation of the rotatable shaft will cause the mixing arms to mix the agricultural product within the bin 14 so as to ensure proper mixing, funneling, and flow of the agricultural product through the bin 14.

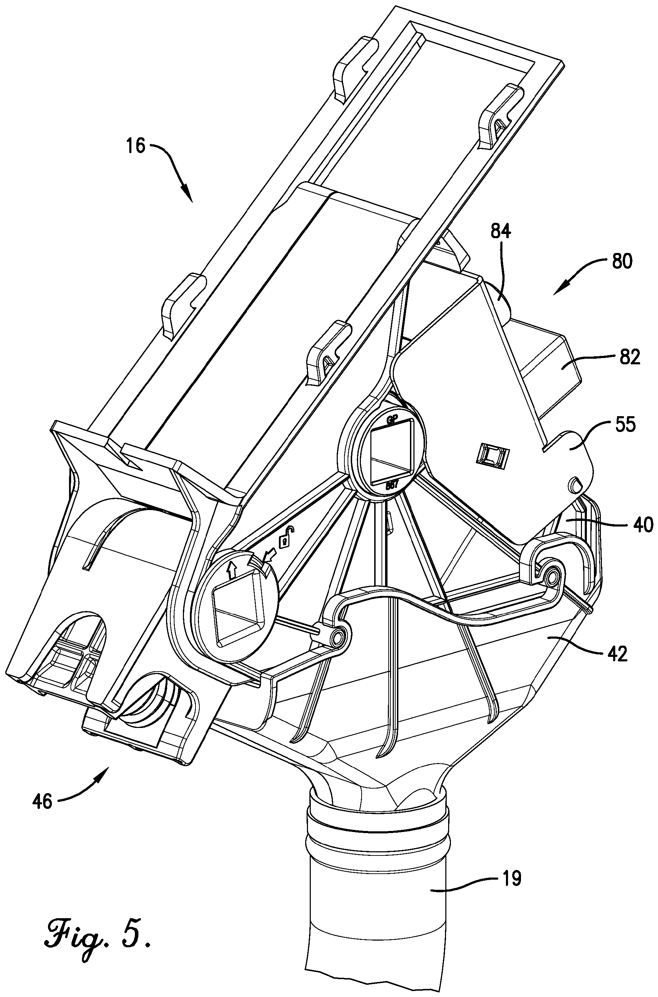

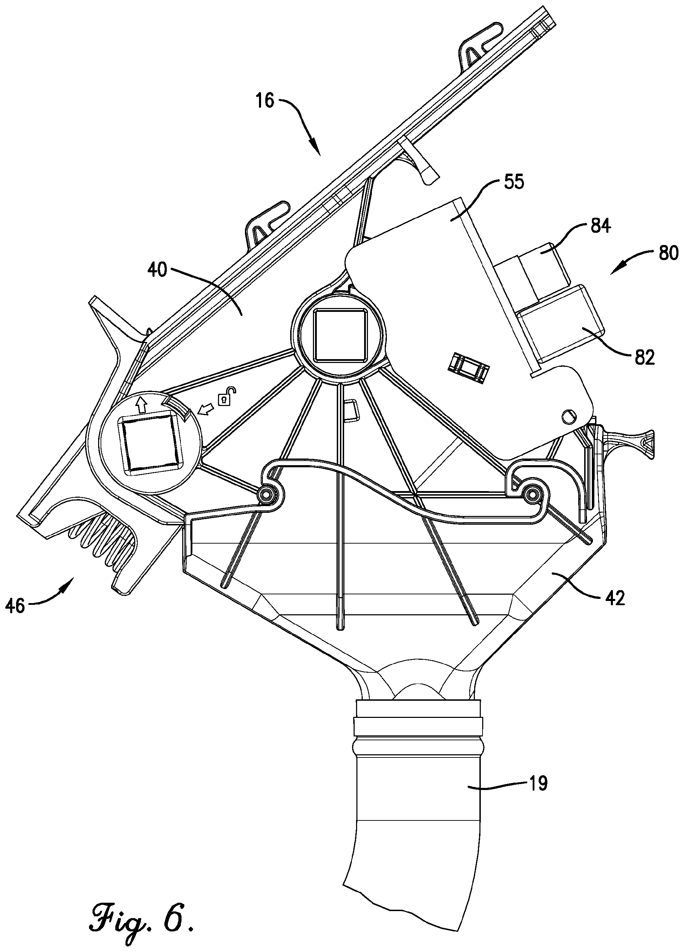

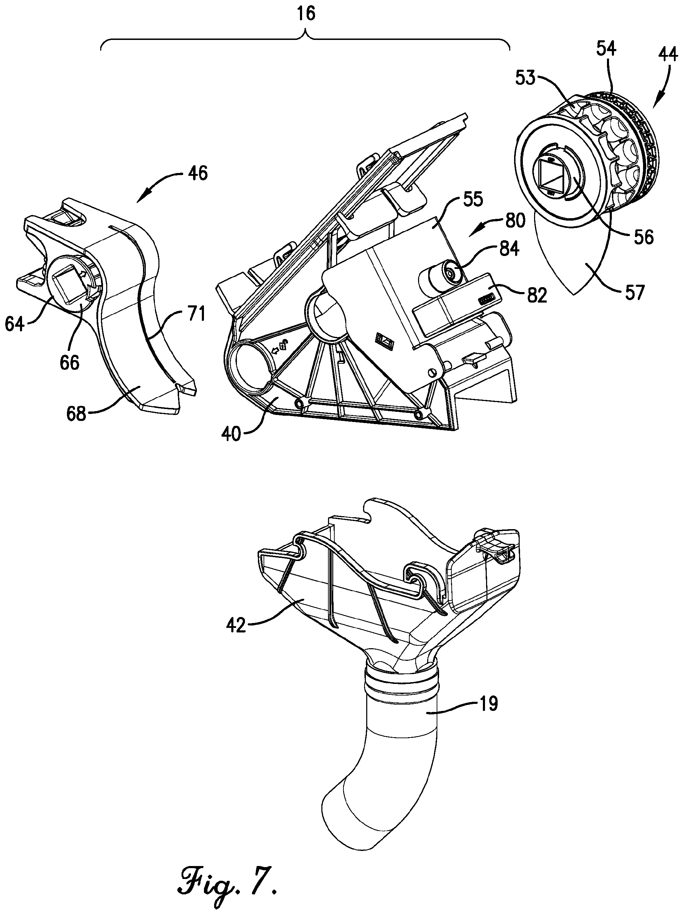

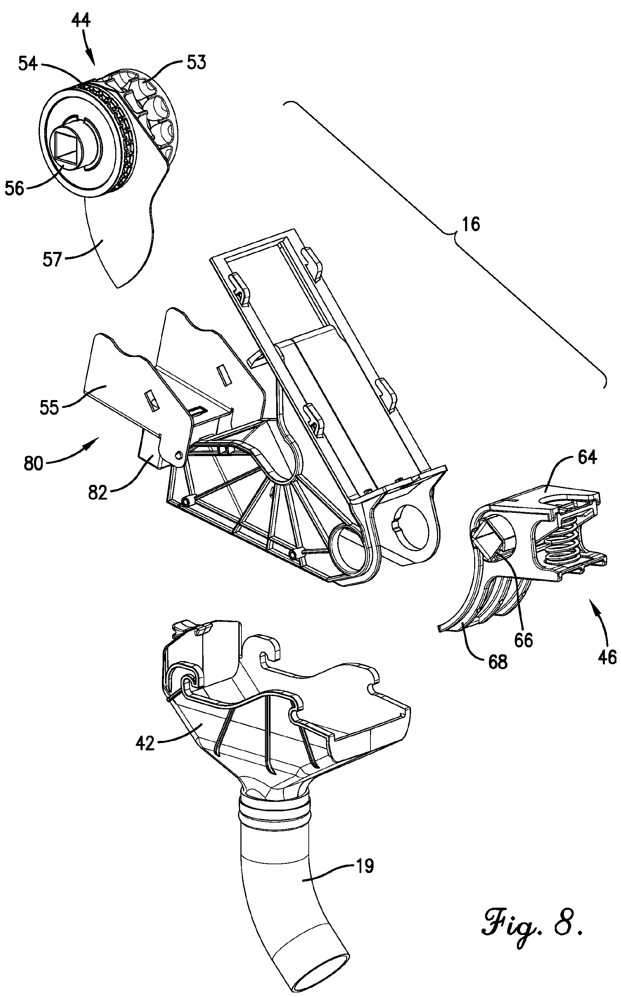

Turning now to the metering devices 16 in more detail, as illustrated in FIGS. 5-10, each metering device 16 may comprise an upper housing 40, a lower housing 42 removably engaged with the upper housing 40, a metering assembly 44 (See FIGS. 7 and 8) removably secured within an interior space presented by the upper and/or lower housing 40, 42, and a gate assembly 46 (See FIGS. 7 and 8) removably secured within an interior space of the upper and/or lower housing 40, 42. In operation of the drill 10, a plurality of the metering devices 16 may be secured to an exterior bottom surface of the bin 14, as shown in FIGS. 2 and 3. Thus, agricultural product can be passed from the bin 14 to the metering devices 16, such that the metering assemblies 44 of the respective metering devices 16 can rotate to convey the agricultural product through the metering devices 16 and out of the metering devices 16 where the agricultural product will be dispensed into or onto the ground.

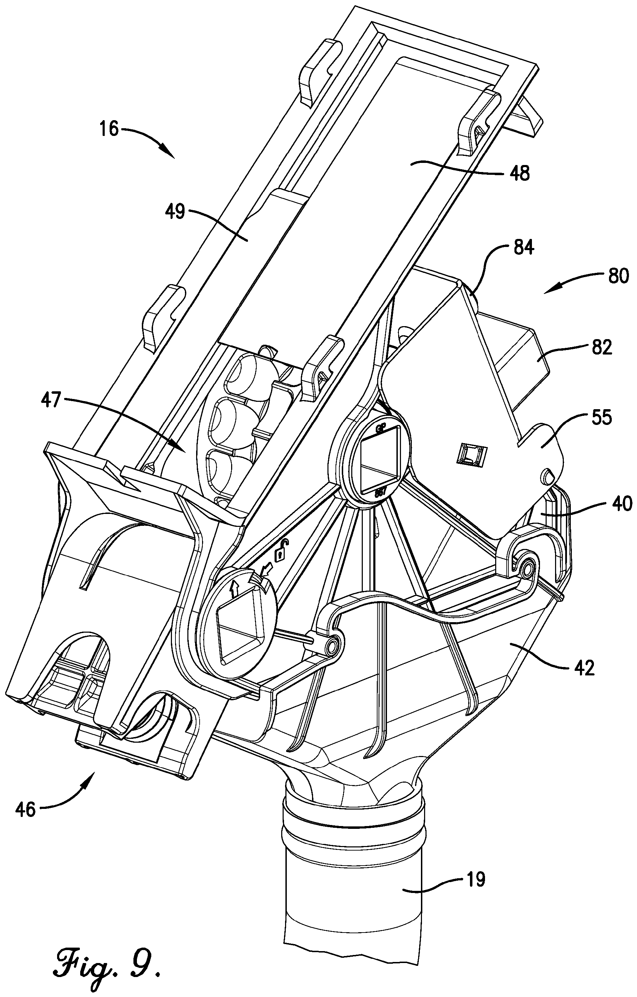

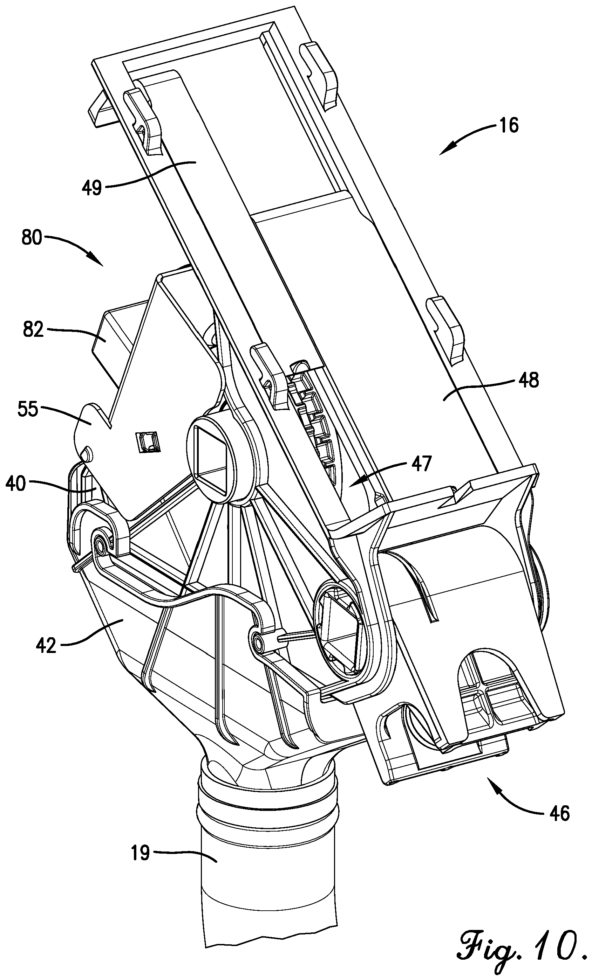

Turning to FIGS. 9 and 10, the upper housing 40 may present a product inlet 47 through selective opening of a first product door 48 and a second product door 49 slidingly engaged with a top of the upper housing 40. Each of the product doors 48, 49 can be slidingly actuated between a closed position and an open position. In the closed position (e.g., slid downward as shown in FIG. 5), the product doors 48, 49 restrict agricultural product from entering the metering device 16. In contrast, in the open position (e.g., slid upward as shown in FIGS. 9 and/or 10), the product doors 48, 49 permit agricultural product to enter the metering device 16 via the presented product inlet 47. In some embodiments, each of the product doors 48, 49 can be partially opened to various levels of extension (i.e., potions between completely closed and completely open) so as to regulate how much agricultural product can be provided into the metering device 16.

As will be described in more detail below, the interior space of the metering device 16 may be divided into two agricultural product sections (e.g., a first agricultural product section and a second agricultural product section), such that two different types of agricultural product can be separately processed through the metering device 16. To facilitate such separate processing, the first and second product doors 48, 49 can be individually actuated. For instance, in order to supply a first agricultural product from the bin 14 to the metering device 16, the first product door 48 can be opened, as shown in FIG. 9, and the second product door 49 can remain closed. As such, the first agricultural product can be passed from the bin 14 to the interior space of the metering device 16 via the product inlet 47 presented by the opened first product door 48. In contrast, to supply a second agricultural product from the bin 14 to the metering device 16, the second product door 49 can be opened, as shown in FIG. 10, and the first product door 48 can be closed. As such, the second agricultural product can be passed from the bin 14 to the interior space of the metering device 16 via the product inlet 47 presented by the opened second product door 49.

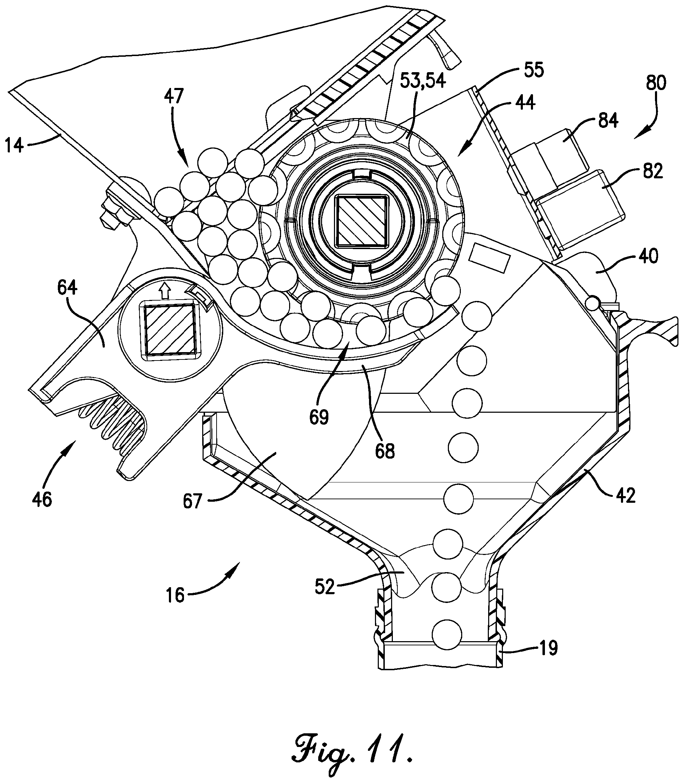

Turning to FIG. 11, upon agricultural product being received into the upper housing 40 of the metering device 16, via the product inlet 47 presented by either the first product door 48 or second product door 49 (product doors not shown in FIG. 11), the agricultural product can be conveyed through metering device 16, via the metering assembly 44. By way of such conveyance, the agricultural product can be dispensed from the lower housing 42 via a product outlet 52. As illustrated in the drawings, the lower housing 42 may be shaped generally as a funnel with an upper end secured to the upper housing 40 and the product outlet 52 positioned a bottom end of the lower housing 42. As such, agricultural product can be dispensed from the metering device 16 via the product outlet 52 of the lower housing 42. In some embodiments, as noted previously, a product tube 19 may be secured to the bottom end of the metering device 16 (e.g., attached to the product outlet 52), such that agricultural product will exit the metering device 16 by passing through the product outlet 52 to the product tube 19. Regardless, embodiments provide for agricultural product to be dispensed from the metering device 16 and/or from the product tube 19 into and/or onto the ground.

Embodiments provide for the metering devices 16 to convey various types of agricultural products. To facilitate such conveyances, the metering assembly 44 of the metering device 16 may comprise a plurality of metering wheels (e.g., a first metering wheel 53 and a second metering wheel 54), as perhaps best illustrated in FIGS. 7 and 8, each being particularly configured to convey a particular type of agricultural product. In some embodiments, the metering assembly 44 may be removable from the upper and lower housings 40, 42. FIGS. 7 and 8 illustrate the metering assembly 44 removed from the upper and lower housings 40, 42. To facilitate such removal, an access door 55 may be hingedly secured to the upper housing 40 so as to be shiftable from a closed position to an open position. With the access door 55 in the open position, as shown in FIG. 8, the access door 55 provides access to the interior space of the metering device 16 via an opening presented by the open access door 55. Through the opening provided by the access door 55, the metering assembly 44 can be inserted into and/or removed from the housing 40, 42 of the metering device 16. FIG. 7 illustrates the access door 55 in the closed position. Furthermore, as will be described in more detail below, the access door 55 may be removably secured to the upper housing 40 (e.g., via a snap fit or friction fit coupling), such that the access door 55 may be removed from the rest of the metering device 16, as necessary. In addition, in some embodiments, the access door 55 may be formed from a transparent material, such as clear plastic, such that an operator of the drill 10 may view the interior space of the metering device 16 by viewing through the access door 55 even while the access door 55 is in the closed position.

Turning to the metering assembly 44 in more detail, as shown in FIGS. 7 and 8, the metering assembly 44 may comprise a sub-shaft 56, the first metering wheel 53 positioned on the sub-shaft 56, the second metering wheel 54 positioned on the sub-shaft 56, and a divider 57 positioned on the sub-shaft 56 between the first metering wheel 53 and the second metering wheel 54. The sub-shaft 56 may comprise an elongated, hollow cylinder with an interior passageway having a surface shaped to conform to an exterior surface of the primary driveshaft 18 (see FIG. 3) associated with the drill 10. As was discussed above, the drill 10 may comprise the primary driveshaft 18, which extends through each of the metering devices 16 that are attached to the bin 14 of the drill 10. The primary driveshaft 18 may be caused to rotate by a power system (not shown) of the drill 10. The power system may take various forms. For instance, the power system may comprise a chain-gear system that is actuated by the drill's 10 movement over the ground. Such actuation of the chain gear system can, thus, impart rotation to the primary driveshaft 18. Rotation of the primary driveshaft 18 is configured to cause a corresponding rotation of the metering wheels 53, 54 of the metering devices 16. Specifically, rotation of the primary driveshaft 18 will cause a corresponding rotation of each of the sub-shafts 56 through which the primary driveshaft 18 extends. Regardless, the rotation rate of the primary driveshaft 18 and, thus, of the metering wheels 53, 54 can be controlled by various methods, including by a control system of the drill 10 (described in more detail below).

The metering wheels 53, 54 may each comprise a hollow interior section and a fluted exterior section. As such, the metering wheels 53, 54 may be slid onto the sub-shaft 56 and secured in place, such that rotation of the sub-shaft 56 will cause a corresponding rotation of the metering wheels 53, 54. The exterior sections of each of the metering wheels 53, 54 may include a number of flutes or concave grooves within which agricultural product (e.g., seed or treatment) can be received or captured for rotation through the metering device 16. The size of the flutes can vary depending on the type and size of the agricultural product intended to be processed by the metering device 16. In some embodiments, the flutes of the first metering wheel 53 may be larger than the flutes of the second metering wheel 54, such that the first metering wheel 53 is configured to capture and/or convey (e.g., via rotation) agricultural product that is larger than the agricultural product that is intended to be captured and/or conveyed (e.g., via rotation) by the second metering wheel 54. For example, the first metering wheel 53 may be configured to capture and convey relatively large-sized seed, while the second metering wheel 54 may be configured to capture and convey relatively small-sized or fine seed.

In some embodiments, each of the metering wheels 53, 54 may comprise two halves that individually make up one half of the respective metering wheel 53, 54. The halves of the metering wheels 53, 54 may each include the flutes on their exterior sections. When the halves are secured together to from the metering wheels 53, 54, the flutes of one of the halves may be misaligned with the flutes of the other one of the halves. Such misalignment of the flutes may provide for a consistent and accurate conveyance of agricultural product through the metering device 16.

The metering assembly 44 may, as noted above, additionally comprise a divider 57 configured to be positioned on the sub-shaft 56 between the two metering wheels 53, 54. As such, the divider 57 may comprise a flat, plate-like element with an aperture for receiving the sub-shaft 56. The divider 57 may have an elongated shape that is configured to extend downward from the sub-shaft. As such, when the metering assembly 44 is installed within the interior space of the metering device 16the divider 57 is configured to divide the interior space of the metering device 16 into two distinct product spaces. Thus, agricultural product entering the metering device 16 will be conveyed by the metering assembly 44 through one of the two product spaces.

In more detail, with the first product door 48 in the open position (as illustrated in FIG. 9), a first type of agricultural product from the bin 14 can pass into the metering device 16 whereby the first metering wheel 53 can capture and convey the first type of agricultural product through the interior space of the metering device 16. Furthermore, due to the divider 57 separating the interior space into the two product spaces, the first type of agricultural product will be conveyed through a first product space by the first metering wheel 53. In contrast, with the second product door 49 in the open position (as illustrated in FIG. 10), a second type of agricultural product from the bin 14 can pass into the metering device 16 whereby the second metering wheel 54 can capture and convey the second type of agricultural product through the interior space of the metering device 16. Furthermore, due to the divider 57 separating the interior space into the two product spaces, the second type of agricultural product will be conveyed through a second product space by the second metering wheel 54.

In addition to the metering assembly 44, certain embodiments of the present invention will provide for the metering device 16 to include the gate assembly 46, which was previously illustrated in FIGS. 7 and 8. Embodiments provide for the gate assembly 46 to comprise a product gate 64 and a sub-shaft 66. The product gate 64 may comprise a base and an elongated, arcuate gate valve 68 extending from the base. When installed within the metering device 16, as perhaps best shown in FIG. 11, the gate valve 68 will be spaced below the metering wheels 53, 54 so as to provide a product channel 69 through which agricultural product can be conveyed by the metering wheels 53, 54. The size of the channel 69 can be adjusted by adjusting a position of the gate valve 68 with respect to the metering wheels 53, 54. For instance, shifting the gate valve 68 downward will create a larger channel 69. Such a larger channel 69 may be preferable when using the metering device 16 to dispense relatively large agricultural products from the bin 14 (e.g., large seeds). Alternatively, shifting the gate valve 68 upward towards the metering wheels 53, 54 will create a smaller channel 69. Such a smaller channel may be preferable when using the metering device 16 to dispense relatively small agricultural products from the bin 14 (e.g., small/fine seeds). Ensuring the appropriate size of channel 69 for a given agricultural product will ensure consistent and accurate flow of such agricultural product through the metering device 16. In some embodiments, it may be preferable to reduce the product channel 69 to a minimum such that the gate valve 68 is forced upward into contact with the metering wheels 53, 54.

As will be described in more detail below, the position of the gate valve 68 (and thus the size of the channel 69) can be adjusted by a secondary driveshaft 70, which as illustrated in FIG. 3 can extend through each of the metering devices 16 of the drill 10. Specifically, the secondary driveshaft 70 may extend through each of the sub-shafts 66 of the gate assemblies 46 of the metering devices 16, such that rotation of the secondary driveshaft 70 will cause a corresponding adjustment to the positions of each of the product gates 64, and particularly to the gate valve 68, with respect to the metering assemblies 44. The secondary driveshaft 70 can be rotated by various components or methods. For instance, the secondary driveshaft 70 may be connected to a handle or lever, which can be manually adjusted by an operator of the drill 10. Alternatively, the secondary driveshaft 70 may be actuated by the power system of the drill (e.g., the chain-gear system) or by an actuator, e.g., an electric motor or gear system. Regardless, the position of the secondary driveshaft 70 and, thus, of the gate valve 68 can be controlled by various methods, including by the control system of the drill 10 (described in more detail below). Regardless, as was noted above, the gate valve 68 being positioned at various positions (e.g., further away from or closer to the metering wheels 53, 54) will provide for the channel 69 to have a correspondingly larger or smaller size. It is noted that the positions of each of the gate valves 68 of the metering devices 16 through which the secondary driveshaft 70 extends can be simultaneously adjusted.

As was described above, the gate valve 68 can be positioned in various operating positions, which each correspond to a different channel 69 size (i.e., the size of the channel presented between the gate valve 68 and the metering wheels 53, 54). Beneficially, in some embodiments, the gate valve 68 may be formed with a slit-like opening 71 (See, e.g., FIG. 9) that receives the divider 57, such that the gate valve 68 may be shifted upward and downward within the metering device 16 without the divider 57 interfering with the movement of the gate valve 68. The closer the gate valve 68 is to the metering wheels 53, 54, the smaller the channel 69. And the further the gate valve 68 is from the metering wheels 53, 54, the larger the channel 69. As such, the secondary driveshaft 70 can be used to position the gate valve 68 in the intended operating position required to generate the channel 69 size necessary for conveying a particular type or size of agricultural product. Furthermore, because the secondary driveshaft 70 extends through each of the metering devices (See FIG. 3), the operating position of each of the gate valves 68 of the metering devices 16 associated with the bin 14 of the drill 10 can be controlled simultaneously.

In addition to the above, each of the metering devices 16 may include a vision system configured to monitor agricultural product flowing through the metering devices 16. In more detail, as illustrated by FIGS. 4-11, the metering device 16 may include a vision system 80 comprising a camera 82 and a light source 84. In some embodiments, each of the camera 82 and/or the light source 84 may be incorporated/integrated with the access door 55 of the metering device 16 in such a manner that the camera 82 can obtain images and/or video of agricultural product flowing through the metering device 16, and the light source 84 can illuminate the interior space of the metering devices 16 including illumination of the agricultural product flowing through the metering device 16. As illustrated in the figures, the camera 82 and the light source 84 may be configured as separate components, each with its own housing and internal elements. However, it is contemplated that the camera 82 and the light source 84 may, alternatively, be combined together within a single housing.

Embodiments provide for the camera 82 to be generally any type of optical device, such as a digital camera, video camera, optical scanner, or the like, configured to capture images and/or videos (generally in the visual spectrum). Similarly, the light source 84 may be generally any type of element, e.g., incandescent bulb, light-emitting diode (LED), or the like, configured to generate and emit light (generally in the visual spectrum). As perhaps best illustrated by FIG. 11, the camera 82 and the light source 84 may be incorporated as part of the access door 55 in such a manner that the camera 82 and the light source 84 can view agricultural product flowing through the metering device 16. Specifically, the camera 82 and the light source 84 may be directed and/or aimed at a distal end (or the "discharge end") of the gate valve 68, such that the camera 82 can obtain images and/or video of the agricultural product flowing through the channel 69 formed between the gate valve 68 and the metering wheels 53, 54. Notably, because the metering assembly 44 may include two metering wheels (i.e., metering wheel 53, 54), the camera 82 may be configured to obtain images and/or video of the agricultural product flowing through the first product space and the second product space via the metering wheels 53, 54, respectively.

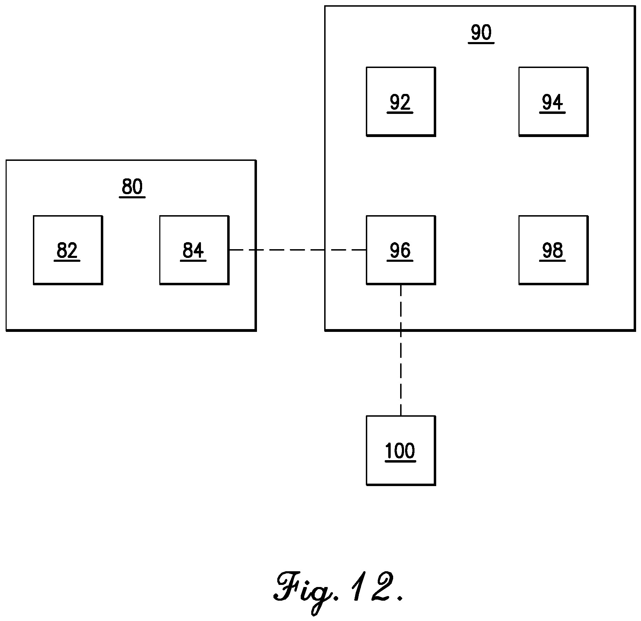

In some embodiments, the drill 10 (or the tractor or prime mover propelling the drill 10) may also include a control system 90, as illustrated schematically by FIG. 12, for controlling the vision system 80 and processing the data obtained by the vision system 80. Specifically, the control system 90 may be configured to analyze the images and/or video captured by the vision system 80 to determine if the flow rate and/or flow pattern of agricultural product through the metering device 16 is satisfactory. The control system 90 may be in the form of a computing device comprising generally any device, component, or equipment with one or more processing elements 92 and associated memory elements 94. For example, the computing device may include a mobile communication devices (including wireless devices), a workstation, a desktop computer, a laptop computer, a palmtop computer, a tablet computer, a portable digital assistant (PDA), smart phone, and the like, or combinations thereof. The processing elements 92 may implement operating systems, and may be capable of executing a computer program, which is also generally known as instructions, commands, software code, executables, applications ("apps"), and the like. The processing elements 92 may include single or multiple-processors, microprocessors, microcontrollers, field programmable gate arrays, application specific circuits, and the like, or combinations thereof. The memory elements 94 may be capable of storing or retaining the computer program and may also store data, typically binary data, including text, databases, graphics, audio, video, combinations thereof, and the like. The memory elements 94 may also be known as a "computer-readable storage medium" and may include random access memory (RAM), read only memory (ROM), flash drive memory, floppy disks, hard disk drives, optical storage media such as compact discs (CDs or CDROMs), digital video disc (DVD), Blu-Ray^{™}, and the like, or combinations thereof.

The control system 90 may be configured to communicate with various other elements via wired or wireless communications elements 96, such as wired data ports (electrically conductive cables or optical cables) or wireless data transceivers. As such, the control system 90 may be configured to communicate via one or more communications networks. The communications networks may include local, metro, or wide area networks, as well as the Internet, or other cloud networks. Furthermore, the communications network may include RF networks, cellular or mobile phone networks, Wi-Fi, Bluetooth, as well as fiber optic networks, or the like.

In view of the above, the vision system 80, including the camera 82, may be in data communication with the control system 90 (e.g., via wired or wireless connection), such that the images and/or video obtained by the camera 82 may be transmitted to the control system 90 for further processing/analysis and/or to be further transmitted to a display for viewing by an operator of the drill 10. For example, the drill 10 (or the tractor or prime mover propelling the drill 10) may also include a graphic display 98, such as a cathode ray tube, liquid crystal display, plasma, or touch screen that is operable to display visual graphics, images, text, etc. As such, the images and/or video of the agricultural product flowing through the metering device 16, as captured by the camera 82, may be transmitted to the control system 80 and/or to the graphic display 98 for presentation to the operator of the drill 10.

In operation, a plurality of the metering devices 16 will be secured to a bottom side of the bin 14 of the drill 10, as illustrated in FIGS. 2 and 3. For each of the metering devices 16, one of the product doors 48, 49 will be configured in the open position, such that agricultural product will be permitted to flow from the associated bin 14 into the metering device 16. As was described above, if the first product door 48 is open, a first type of agricultural product (e.g., large seed) can flow from the bin 14 into the first product space of the metering device 16, such that the first metering wheel 53 can convey the first type of agricultural product through the metering device 16 for dispensing from the drill 10 and into and/or onto the ground. Alternatively, if the second product door 49 is open, a second type of agricultural product (e.g., small, fine seed) can flow from the bin 14 into the second product space 61 of the metering device 16, such that the second metering wheel 54 can convey the second type of agricultural product through the metering device 16 for dispensing from the drill 10 and into and/or onto the ground.

FIG. 11 illustrates agricultural product flowing through the metering device 16 with the gate valve 68 in one of the normal operating positions. As illustrated, agricultural product will flow from the bin 14 into the interior space of the metering device 16 via the product inlet 47 (e.g., through one of the open product doors 48, 49). The agricultural product is propelled through the interior space of the metering device 16 via rotation of the metering wheels 53, 54 of the metering assembly 44. Specifically, agricultural product will be captured by the flutes on the metering wheels 53, 54, such that rotation of the metering wheels 53, 54 will convey the agricultural product counterclockwise (when viewing FIG. 11), around the interior space of the metering device 16 to the product gate 64. At such point, the metering wheels 53, 54 continue to convey the agricultural product through the channel 69 presented between the metering wheels 53, 54 and the gate valve 68 of the product gate 64 until the agricultural product passes over the distal end (or the "discharge end") gate valve 68 and falls out of the metering device 16 through the product outlet 52. As should be apparent, the size of the channel 69 can be selected to permit a particular type and size of agricultural product to be efficiently conveyed through the metering device 16. For larger agricultural product, the size of the channel 69 can be increased by positioning the gate valve 68 further away from the metering wheels 53, 54 by rotating the gate assembly 46 via rotation of the secondary driveshaft 70. Alternatively, for smaller agricultural product, the size of the channel 69 can be decreased by positioning he gate valve 68 closer to the metering wheels 53, 54 by rotating the gate assembly 46 via rotation of the secondary driveshaft 70.

As the agricultural product is traveling through the metering device 16, the vision system 80 can be used to monitor the flow of such agricultural product. Specifically, the vision system 80 can be used to (i) count the number of agricultural product particulates (e.g., seed) flowing through the metering device 16 to improve accuracy of the count, and/or (ii) determine how uniformly the agricultural product is flowing through the metering device 16. Counting of the agricultural product may be referred to herein as monitoring or determining the flow rate of agricultural product through the metering device 16. Determining how uniformly the agricultural product is flowing through the metering device 16 may be referred to herein as monitoring or determining the flow pattern of agricultural product through the metering device 16.

As was described previously, the camera 82 may be integrated with the access door 55 such that the camera 82 is aimed at a distal end (or the "discharge end") of the gate valve 68. In some embodiments, the light source 84 may also be aimed at a distal end (or the "discharge end") of the gate valve 68 so as to illuminate the agricultural product flowing through the metering device 16. As a result, the camera 82 can obtain images and/or video of the agricultural product flowing through the channel 69 formed between the gate valve 68 and the metering wheels 53, 54. Notably, because the metering assembly 44 may include two metering wheels (i.e., metering wheel 53, 54) and a divider 57 that divides the interior space of the metering assembly 44 into two, separate product spaces, the camera 82 may be configured to obtain images and/or video of the agricultural product flowing through either (or both of) the first product space and the second product space, as propelled by the metering wheels 53, 54, respectively.

It should be understood that various numbers of metering devices 16 of the seed drill 10 may be configured with vision systems 80 to monitor the agricultural product flowing through respective metering devices 16. As was described previously, the access doors 55 of the metering devices 16 may be configured to be removably coupled with the upper housings 40 of the metering devices 16. Because the visions systems 80 (i.e., including the cameras 82 and/or light sources 84) are integrated with the access doors 55, the visions systems 80 are also configured to be removably coupled with the upper housings 40 of the metering devices 16. As a result, the vision systems 80 may be modular and may be integrated with any number of metering devices 16 included on the seed drill 10. For example, the vision system 80 may be installed on at least one metering device 16, on one-quarter of all of the metering devices 16, on one-half of all of the metering devices 16, or on all of the metering devices 16 of the seed drill 10.

Regardless, the images and/or video obtained from the camera 82 (or from multiple cameras 82 if vision systems 80 are integrated with multiple metering devices 16) may be transmitted to the control system 90 (e.g., stored on the memory elements 94) for further processing and analysis. The control system 90 may, via the processing elements 92, analyze the images and/or video to obtain an accurate count of the agricultural product flowing through the metering device 16 (or through multiple metering devices 16 if vision systems 80 are integrated with multiple metering devices 16). Alternatively, or in addition, the control system 90 may, via the processing elements 92, analyze the images and/or video to qualify how well the agricultural product is flowing through the metering device 16 (or through multiple metering devices 16 if vision systems 80 are integrated with multiple metering devices 16). For example, the control system 90 may determine whether the agricultural product is uniformly flowing through the metering device 16 (or through multiple metering devices 16 if vision systems 80 are integrated with multiple metering devices 16). The analysis may be performed by the processing elements 92 executing computer programs stored on the memory elements 94, with such computer programs perhaps incorporating: (i) human crafted, traditional machine vision algorithms, and/or (ii) deep-learning, neural network methods of computer-optimized algorithms.

Based on the analysis of the images and/or video performed by the control system 90, adjustments to the metering devices 16 may be made to improve the operation of the metering devices 16 to achieve proper flow of agricultural product through the metering devices 16 (i.e., a proper count of agricultural product or an even flow of agricultural product flowing through the metering devices 16). Specifically, if the control system 90 determines that the count of agricultural product flowing through the metering device 16 (or through multiple metering devices 16 if vision systems 80 are integrated with multiple metering devices 16) is too low, an alert can be generated (e.g., via the graphic display 98) to notify the operator of the drill 10 that the flow rate agricultural product through the metering device 16 (or through multiple metering devices 16 if vision systems 80 are integrated with multiple metering devices 16) should be increased. As such, the operator may adjust the functionality of the drill 10, such as by increasing the rotations per minute of the primary driveshaft 18 so that the metering wheels 53, 54 of the metering devices 16 (through which the primary driveshaft 18 extends) will rotate at a faster rate to permit a higher rate of agricultural product to flow through the metering devices 16. Stated differently, such an adjustment will increase the count of agricultural product flowing through the metering devices 16.

In contrast, if the control system 90 determines that the count of agricultural product flowing through the metering device 16 (or through multiple metering devices 16 if vision systems 80 are integrated with multiple metering devices 16) is too high, an alert can be generated (e.g., via the graphic display 98) to notify the operator of the drill 10 that the flow rate agricultural product through the metering device 16 (or through multiple metering devices 16 if vision systems 80 are integrated with multiple metering devices 16) should be decreased. As such, the operator may adjust the functionality of the drill 10, such as by decreasing the rotations per minute of the primary driveshaft 18 so that the metering wheels 53, 54 of the metering devices 16 (through which the primary driveshaft 18 extends) will rotate at a slower rate to permit a slower rate of agricultural product to flow through the metering devices 16. Stated differently, such an adjustment will reduce the count of agricultural product flowing through the metering devices 16.

Adjustments to the rate at which agricultural product is flowing through the metering devices 16 (i.e., adjustments to the count of agricultural product) can also be made by the operator opening or closing the product doors 48, 49 of the metering devices 16 (i.e., to permit additional or less agricultural product to enter the metering devices 16 from the bins 14). Furthermore, Adjustments to the rate at which agricultural product is flowing through the metering devices 16 (i.e., adjustments to the count of agricultural product) can be made by the operator adjusting the size of the product channels 69 of the metering devices 16. Specifically, the operator may provide for the secondary driveshaft 70 to rotate to actuate the gate valves 68 of the metering devices 16 further away from the metering wheels 53, 54, so as to increase the size of the product channels 69 of the metering devices. Alternatively, the operator may provide for the secondary driveshaft 70 to rotate to actuate the gate valves 68 of the metering devices 16 closer to the metering wheels 53, 54, so as to decrease the size of the product channels 69 of the metering devices. Thus, adjustments to the rate at which agricultural product is flowing through the metering devices 16 (i.e., adjustments to the count of agricultural product) can be made by the operator adjusting the rotational rate of the metering wheels 53, 54 of the metering devices 16 (e.g., by adjusting the rotational rate of the primary driveshaft 18), adjusting the position of the product doors 48, 49 of the metering devices 16 (i.e., opening or closing the product doors), and/or by adjusting the size of the product channels 69 of the metering devices 16 (i.e., by adjusting the position of the product gates 64 and/or gate valves 68 via rotation of the secondary driveshaft 70).

In addition to the manual adjustments described above, which can be made be made by an operator of the drill 10, similar adjustments can be made in an automated fashion by the control system 90. For example, one or more of the primary driveshaft 18, the product doors 48, 49, and/or the secondary driveshaft 70 may be operably connected to actuators 100, which can be incorporated with the power system of the drill 10, such that the actuators 100 can be controlled to adjust the rotation of the primary and secondary driveshafts 18, 70 and/or the position of the product doors 48, 49. Such actuators 100 may comprise linear actuators, rotary actuators, motors, or the like. The actuators 100 may be electric, pneumatic, hydraulic, or otherwise mechanical actuators.

The control system 90 may be configured to control such actuators 100, such that upon the control system 90 determining that the rate at which agricultural product is flowing through the metering devices 16 is improper (i.e., via analysis of the images and/or video obtained by the visual system 80), the control system 90 may automatically make adjustments to the metering devices 16 to adjust the flow of agricultural product therethrough. Specifically, the adjustments of the rate at which agricultural product is flowing through the metering devices 16 (i.e., adjustments to the count of agricultural product) can be made by control system 90 controlling the actuators 100 to adjust the rotational rate of the metering wheels 53, 54 of the metering devices 16 (e.g., by adjusting the rotational rate of the primary driveshaft 18), to adjust the position of the product doors 48, 49 of the metering devices 16 (i.e., opening or closing the product doors), and/or to adjust the size of the product channels 69 of the metering devices 16 (i.e., by adjusting the position of the product gates 64 and/or the gate valves 68 via rotation of the secondary driveshaft 70). The above-described changes to the rotation rate of the primary and secondary driveshafts 18, 70 and/or the position of the product doors 48, 49, whether done manually or automatically, may be performed not only to adjust the rate at which agricultural product is flowing through the metering devices 16, but also may be performed to adjust the flow pattern of agricultural product through the metering devices 16 (e.g., to achieve a more uniform flow of agricultural product through the metering devices 16).

In certain embodiments, it is contemplated that the control system 90 may make simultaneous adjustments to multiple components of the metering devices 16 to properly adjust the flow of agricultural product therethrough. For example, the control system 90 may simultaneously adjust both (i) the rotational rate of the metering wheels 53, 54 (e.g., by adjusting the rotational rate of the primary driveshaft 18), and (ii) the size of the product channels 69 (i.e., by adjusting the position of the product gates 64 and/or the gate valves 68 via rotation of the secondary driveshaft 70). In other embodiments, the control system 90 may also actuate the product doors 48, 49 in combination with the metering wheels 53, 54 and/or the product gates 64. Regardless, such simultaneous control of components of the metering devices 16 may be particularly beneficial for improving flow characteristics through the metering devices 16 (e.g., to achieve a more uniform flow of agricultural product through the metering devices 16). To improve the uniformity of flow through the metering devices 16, the control system 90 may actuate the gate valves 68 to be raised closer to the metering wheels 53, 54 to thereby reduce the size of the product channels 69. However, such a reduction in the size of the product channels 69 may cause the rate of flow through the metering devices 16 to unwantedly reduce. To compensate for such a flow rate reduction, the control system 90 may increase the rotation rate of the metering wheels 53, 54 to increase the flow rate of agricultural product through the metering devices 16. Thus, the simultaneous control of multiple components of the metering devices 16 can be used to control flow rate and flow patterns through the metering devices 16.

In some additional embodiments, the images and/or video obtained by the camera 82 of the vision system 80 may be transmitted directly to the graphic display 98, such that the operator of the drill 10 can immediately observe the flow rate and/or flow pattern of agricultural product through the metering device 16 (or through multiple metering devices 16 if vision systems 80 are integrated with multiple metering devices 16). Based on the images and/or video observed by the operator, the operator can make adjustments to the metering devices 16 to adjust the flow rate and/or flow pattern of agricultural product through the metering device 16 (or through multiple metering devices 16 if vision systems 80 are integrated with multiple metering devices 16), as was previously described.

Although the invention has been described with reference to the one or more embodiments illustrated in the figures, it is understood that equivalents may be employed and substitutions made herein without departing from the scope of the invention as recited in the claims. For example, although the above description and the accompanying figures illustrate the camera 82 and light source 84 being positioned on the access door 55 on the rear side of the metering device 16, such that the camera 82 is aimed in a forward direction to obtain images and/or video of agricultural product flowing through the metering device 16 (as well as images and/or video of the rear of the metering wheels 53, 54 and gate valve 68), it should be understood that that the camera 82 and light source 84 may be positioned at other locations about the metering devices 16. For example, the camera 82 and/or light source 84 may be positioned on lateral sides of the access door 55 and/or on lateral sides of the housings 40, 42 of the metering device 16. As such, the camera 82 can be aimed in a lateral or sideways direction so as to obtain a side elevation view of agricultural product flowing through the metering device 16 (as well as images and/or video of the lateral sides of metering wheels 53, 54 and gate valve 68). Such a side elevation view may be similar to the view shown in FIG. 11. Regardless, it is understood that the camera 82 and/or light source 84 may be positioned at various locations about the metering device 16.

Furthermore, the vision system 80 may comprise multiple cameras 82 and/or light sources 84 for a given metering device 16. For example, a given metering device 16 may include a first camera 82 integrated with a rear side of the access door 55 and aimed in a forward direction towards the agricultural product flowing through the seed meter 16 (and toward the metering wheels 53, 54 and gate valve 68), as well as a second camera 82 integrated with a lateral side of the access door 55 (or a lateral side of the housing 40, 42) and aimed in a lateral direction towards the agricultural product flowing through the seed meter 16 (and toward the metering wheels 53, 54 and gate valve 68). Such multiple cameras 82 on a single metering device 16 can provide multiple viewing angles that can be used by the control system 90 to control the metering device 16 and/or that can be viewed by an operator of the drill 10. In some further embodiments, the images and/or video from the multiple cameras 82 may be combined to form composite or overlay images and/or video that can be analyzed by the control system 90 and/or viewed by an operator of the drill 10.

Having thus described one or more embodiments of the invention, what is claimed as new and desired to be protected by Letters Patent includes the following:

## Claims

1. A metering device for dispensing agricultural product, wherein said metering device comprises:
a housing enclosing an interior space;
at least one metering wheel positioned within the interior space of said housing and configured to convey agricultural product through said metering device;
an access door rotatably coupled with said housing and configured to selectively provide access to the interior space of said housing; and
a vision system comprising at least one camera incorporated with said access door, wherein said camera is configured to capture images and/or video of agricultural product being conveyed through said metering device.

2. The metering device of claim 1, wherein said vision system further comprises at least one light source incorporated with said access door, wherein said light source is configured to illuminate the interior space of said housing.

3. The metering device of claim 1 or claim 2, wherein said access door and said vision system are removably coupled with said housing.

4. The metering device of any preceding claim, wherein said camera is configured to transmit the captured images and/or video of agricultural product to a control system, and wherein the control system is configured to analyze the images and/or video to determine if the flow rate and/or flow pattern of agricultural product through said metering device is appropriate.

5. The metering device of claim 4, wherein the control system is configured to send an alert to an operator of said metering device if the flow rate and/or flow pattern of agricultural product through said seed meter is not appropriate, and wherein said metering device is configured to be adjusted to modify the flow rate and/or flow pattern of agricultural product through said metering device.

6. The metering device of claim 5, wherein said metering device is configured to be adjusted to modify the flow rate and/or flow pattern of agricultural product through said metering device by adjusting a rate of rotation of said metering wheel.

7. The metering device of claim 5 or claim 6, wherein said metering device comprises a gate valve located below said metering wheel, presenting a product channel between said gate valve and said metering wheel, wherein said metering device is configured to be adjusted to modify the flow rate and/or flow pattern of agricultural product through said metering device by adjusting a position of said gate valve; and/or wherein said metering device comprises at least one product door configured to selectively present an inlet for agricultural product to enter said metering device, wherein said metering device is configured to be adjusted to modify the flow rate and/or flow pattern of agricultural product through said metering device by adjusting a position of said product door.

8. The metering device of any one of claims 4 to 7, wherein the control system is configured to automatically modify the flow rate and/or flow pattern of agricultural product through said seed meter if the control system determines that the flow rate and/or flow pattern of agricultural product through said metering device is not appropriate; optionally wherein the control system is configured to automatically modify the flow rate and/or flow pattern of agricultural product through said seed meter by simultaneously adjusting two or more of the following: a rate of rotation of said metering wheel, a position of a gate valve positioned below said metering wheel, and/or a position of a product door that selectively presents an inlet for agricultural product to enter said metering device.

9. The metering device of any preceding claim, wherein said metering device comprises a gate valve positioned below said metering wheel, presenting a product channel between said gate valve and said metering wheel, wherein said camera is aimed at said gate valve.

10. The metering device of any preceding claim, wherein the captured images and/or video of agricultural product captured by said camera are configured to be transmitted to a graphic display; and/or wherein said access door is formed from a transparent material.

11. The metering device of any preceding claim, wherein said metering device is configured to be coupled to a seed bin associated with a seed drill, and wherein the agricultural product comprises seed.

12. An implement for dispensing agricultural product, said implement comprising:
a bin for holding the agricultural product; and
a plurality of metering devices secured to a bottom of said bin and configured to
dispense agricultural from said bin onto the ground, wherein each of said metering devices includes -
a housing enclosing an interior space,
at least one metering wheel positioned within the interior space of said housing and configured to convey agricultural product through said metering device,
an access door rotatably coupled with said housing and configured to selectively provide access to the interior space of said housing,
a vision system comprising at least one camera incorporated with said access door, wherein said camera is configured to capture images and/or video of agricultural product being conveyed through said metering device; and
a control system comprising a processing element configured to analyze the images and/or video to determine if flow rates and/or flow patterns of agricultural product through said metering devices is appropriate.

13. The implement of claim 12, further comprising a driveshaft extending through each of said metering wheels of said metering devices, wherein a rotational rate of said driveshaft is configured to be adjusted to modify the flow rates and/or flow patterns of agricultural product through said metering devices; and/or wherein each of said metering devices includes a gate valve located below a respective metering wheel, presenting a product channel between said gate valve and said metering wheel, and further comprising a driveshaft extending through each of said gate valves of said metering devices, wherein actuation of said driveshaft is configured to modify the flow rates and/or flow patterns of agricultural product through said metering devices.

14. The implement of claim 12 or claim 13, further comprising a graphic display, wherein the captured images and/or video of agricultural product are configured to be presented on the graphic display.

15. A method of dispensing agricultural product from an implement, said method comprising the steps of:
(a) transferring agricultural product from a bin of the implement to a metering device, wherein the metering device comprises a housing and an access door rotatably coupled with the housing;
(b) conveying agricultural product through the metering device;
(c) obtaining, via a camera integrated with the access door, images or video of the agricultural product being conveyed in step (b);
(d) transmitting the images or video to a control system configured to analyze the images or video to determine a flow rate or a flow pattern of the agricultural product through the metering device; and
(e) adjusting the metering device to modify the flow rate or the flow pattern of agricultural product through the metering device.
